**Europäisches Patentamt**

**European Patent Office**

**Office européen des brevets**

(11) Veröffentlichungsnummer: **0 208 878**
A2

# (12) EUROPÄISCHE PATENTANMELDUNG

(21) Anmeldenummer: 86107055.5

(22) Anmeldetag: 23.05.86

(51) Int. Cl.⁴: **H 02 G 3/22**

(30) Priorität: 18.07.85 DE 3525644

(43) Veröffentlichungstag der Anmeldung: 21.01.87
Patentblatt 87/4

(84) Benannte Vertragsstaaten: AT BE CH FR GB IT LI NL SE

(71) Anmelder: Hauff, Werner, Herisbühlstrasse 19,
D-7925 Dischingen-Ballmertshofen (DE)

(72) Erfinder: Hauff, Werner, Herisbühlstrasse 19,
D-7925 Dischingen-Ballmertshofen (DE)

(74) Vertreter: Fay, Hermann, Dipl.-Phys. Dr.,
Ensingerstrasse 21 Postfach 1767, D-7900 Ulm (Donau)
(DE)

(54) Anordnung zur Brandüberwachung in einem Gebäude.

(57) Die Anordnung zur Brandüberwachung in einem Gebäude umfaßt mindestens eine Durchführung für wenigstens eine Leitung (2), insbesondere ein elektrisches Kabel, durch eine Wandöffnung in einer der Gebäudewände (1). Die Durchführung bildet mit zwei die Wandöffnung auf beiden Wandseiten gegen die Leitung (2) einerseits und die Laibung (3) der Wandöffnung andererseits abschließenden Dichtkörpern (4) einen Feuerschutzabschluß, durch den die Leitungstrasse zwischen den beiden durch die Gebäudewand (1) voneinander getrennten Brandabschnittszonen feuerbeständig abgeschottet ist. Innerhalb der Durchführung ist mindestens ein elektrischer Temperatursensor (12.1 bis 12.4) angeordnet, dessen elektrische Verbindungsleitung (13) zu einer der Erfassung der Sensorsignale dienenden Überwachungsstelle unmittelbar aus dem Inneren der Durchführung in die Gebäudewand (1) geführt ist und darin brandgeschützt verläuft. Die Sensoren und ihre Verbindungsleitungen (13) sind daher im Brandfall vor einer vorzeitigen Beschädigung geschützt. Die Durchführung mit den Sensoren und den Verbindungsleitungen (13) wird in die Gebäudewand (1) schon bei ihrer Herstellung eingebettet.

Werner Hauff

Herlsbühlstraße 19

7925 Ballmertshofen

7900 Ulm, 30.04.86

Akte E/6870 f/sr

- 1 -

## Anordnung zur Brandüberwachung in einem Gebäude.

Die Erfindung betrifft eine Anordnung zur Brandüberwachung in einem Gebäude mit mindestens einer
Durchführung für wenigstens eine Leitung, insbesondere ein elektrisches Kabel, durch eine Wandöffnung in einer der Gebäudewände, wobei die
Durchführung mit zwei die Wandöffnung auf beiden
Wandseiten gegen die Leitung einerseits und die
Laibung der Wandöffnung andererseits abschließenden Dichtkörpern einen Feuerschutzabschluß bildet,
durch den die Leitungstrasse zwischen verschiedenen, durch die Gebäudewand voneinander getrennten
Brandabschnittszonen feuerbeständig abgeschottet
ist.

Durchführungen der erwähnten Art gehören zum
nicht vorveröffentlichten Stand der Technik und
sind zum Beispiel in den Patentanmeldungen
P 34 19 352.9 und P 34 25 429.3 beschrieben. Derartige Durchführungen werden schon bei der Herstellung der Gebäudewand in die Wand eingebettet,

...

- 2 -

und zwar entweder insgesamt oder doch zumindest mit ihren wesentlichen Teilen. Insbesondere besteht die Möglichkeit, die Durchführung zwischen den Schalungswänden einer Betonwand so anzuordnen, daß sie bei der fertigen Wand nach dem Entfernen der Schalung bündig mit den Wandflächen abschließt. - Im übrigen sind Anordnungen zur Brandüberwachung in einem Gebäude in den verschiedensten Ausführungsformen bekannt. Ihnen ist meistens gemeinsam, daß Temperatur-, Rauch-, und/oder Gassensoren oder dergl. an geeigneten Stellen in den zu überwachenden Räumen vorgesehen sind, die elektrische Überwachungssignale liefern, welche über Verbindungsleitungen einer Überwachungsstelle zugeführt werden und dort außer üblichen Alarmsignalen auch automatisch Einrichtungen bzw. Geräte zur Brandbekämpfung, insbesondere Sprinkleranlagen oder dergl., auslösen und erforderlichenfalls auch steuern können. - Die Installation derartiger Brandüberwachungsanordnungen erfolgt frühestens nach Erstellung des Gebäude-Rohbaus und ist mit einem erheblichen Montageaufwand verbunden. Nachteilig ist außerdem, daß die Verbindungsleitungen zwischen den Sensoren und der Überwachungsstelle entweder nur auf der Wandaußenseite oder nur unter Putz verlaufen, also selbst der Brandeinwirkung weitgehend ausgesetzt und daher gegen Beschädigung im Brandfall sehr empfindlich sind. Das gilt auch für die Sensoren selbst.

Der Erfindung liegt die Aufgabe zugrunde, eine Anordnung der eingangs genannten Art so auszubilden, daß eine besonders einfache und kostensparende Montage der Anordnung möglich ist, daß weiter die Temperatur an im Brandfall besonders sensibler Stelle erfaßt wird, so daß die Brandwarnung schon sehr frühzeitig erfolgt, und daß die Anordnung selbst insgesamt möglichst brandgeschützt ist, so daß sie eine große Feuerwiderstandsdauer besitzt und also die Überwachungssignale der Sensoren über eine möglichst lange oder sogar die gesamte Zeitdauer des Brandablaufs erzeugt und an die Überwachungsstelle übermittelt werden.

Diese Aufgabe wird nach der Erfindung dadurch gelöst, daß innerhalb der Durchführung mindestens ein elektrischer Temperatursensor angeordnet ist, und daß die elektrische Verbindungsleitung zwischen dem Temperatursensor und einer zur Erfassung der Sensorsignale dienenden Überwachungsstelle unmittelbar aus dem Inneren der Durchführung in die Gebäudewand geführt ist und darin brandgeschützt verläuft.

Die erfindungsgemäße Anordnung des Temperatursensors innerhalb der Durchführung hat zur Folge, daß in besonderem Maße die Temperatur der Leitung bzw. Leitungen erfaßt wird. Diese Temperatur ist ein besonders empfindlicher Indikator für den Brandfall, da die Temperaturerhöhung einer an irgend einer Stelle der Leitungstrasse durch einen Brand erhitzten Leitung, insbesondere eines elektrischen Kabels, sofort längs der Leitung weiter geleitet wird, die Leitungen also besonders gute Wärmeleiter zwischen dem Brandort und dem Temperatursensor darstellen, so daß der Sensor schon sehr frühzeitig im Laufe der Brandentwicklung anspricht. Da weiter der Temperatursensor sich innerhalb der ohnehin feuergeschützt ausgebildeten Durchführung befindet und die Verbindungsleitungen direkt von der Durchführung aus bis zur Überwachungsstelle tief innerhalb der Wand verlaufen, ist die Dauer der Überwachungsfunktion im Brandfall optimal lang, nämlich im wesentlichen gleich der Feuerwiderstandsdauer der Durchführung selbst, während die Verbindungsleitungen innerhalb der Gebäudewand praktisch völlig geschützt sind. Sensoren und Verbindungsleitungen können somit im Fall eines Brandes nicht vorzeitig zerstört werden. Von wesentlicher Bedeutung ist schließlich die besonders einfache Montage und Verlegung der erfindungsgemäßen Anordnung. Sie ergibt sich dadurch, daß die Durchführungen mit den darin vorgesehenen Sensoren einschließlich deren Verbindungsleitungen zur Überwachungsstelle schon bei der Herstellung der Gebäudewand in die Wand eingebettet, also insbesondere im Fall einer Betonwand schon vor dem Gießen der Wand im Schalungshohlraum verlegt werden, so daß die Verbindungsleitungen überall tief im Inneren der fertigen Gebäudewand verlaufen, wie es bei einer Leitungsverlegung erst nach Fertigstellung der Wand ausgeschlossen ist. Im übrigen ent-

- 5 -

stehen keine speziellen Montage- oder Verlegungskosten, wie dies bei einer nachträglichen Montage
an der fertigen Gebäudewand unvermeidbar ist.

Im einzelnen besteht die Möglichkeit, den Temperatursensor in einem der Dichtkörper oder in jedem Dichtkörper einen eigenen Temperatursensor vorzusehen.
Der Sensor steht dann über den Dichtkörper in wärmeleitender Verbindung mit der Leitung, wobei die vom
Dichtkörper gebildete Wärmeleitungsbrücke sehr kurz
sein kann, wenn der Temperatursensor möglichst nahe
an der Wandung der im Dichtkörper für die Leitung
vorhandenen Leitungsaufnahme angeordnet ist. Weiter
besteht die Möglichkeit, je Dichtkörper mehrere
Temperatursensoren vorzusehen und einen dieser Temperatursensoren an der äußeren Stirnfläche des Dichtkörpers anzuordnen. Dieser letztere Temperatursensor
kann dann auch auf die Raumtemperatur selbst ansprechen, und zwar auf die Raumtemperatur desjenigen
Gebäuderaums, dem die den Sensor aufweisende äußere
Stirnfläche des Dichtkörpers zugewendet ist. Außerdem kann der Temperatursensor bzw. einer von mehreren
anderen Temperatursensoren im Zwischenraum axial
zwischen den Dichtkörpern und radial zwischen der Leitung und der Laibung der Wandöffnung angeordnet sein.
Der Sensor kann dabei auch unmittelbar an der Leitung sitzen und mit ihr im direkten Wärmekontakt
stehen.

Zweckmäßig ist für die Verbindungsleitungen in der Gebäudewand ein die Verbindungsleitungen aufnehmendes Leitungsrohr vorgesehen, das aus der Wand unmittelbar innerhalb der Durchführung mündet. Das Leitungsrohr kann aus Kunststoff bestehen und die Verbindungsleitungen vor direktem Kontakt mit in der Gebäudewand befindlichen Bewehrungsteilen schützen. Außerdem kann das Leitungsrohr eine zusätzliche wärmedämmende Schutzfunktion für die Verbindungsleitungen erfüllen. Vorzugsweise liegt die Mündung des Leitungsrohres im Zwischenraum zwischen den Dichtkörpern, so daß die aus dem Leitungsrohr in die Durchführung austretenden Verbindungsleitungen in einfacher Weise zu den an verschiedenen Stellen in der Durchführung angeordneten Sensoren geführt werden können. Handelt es sich insbesondere um eine Durchführung mit einem Laibungsrohr zwischen den Dichtkörpern, so liegt zweckmäßig die Mündung des Leitungsrohres in der Wand des Laibungsrohres. Das Leitungsrohr kann schließlich auch dazu dienen, die Feuerdämmung der Durchführung noch zu verbessern. Insoweit schlägt die Erfindung vor, daß das Leitungsrohr mit einem Behälter für ein Brandschutzmittel in Verbindung steht und das Brandschutzmittel, gegebenenfalls erst nach Aktivierung im Brandfall, durch das Leitungsrohr in die Durchführung einbringbar ist.

Selbstverständlich besteht im Rahmen der Erfindung im übrigen die Möglichkeit, daß weitere Sensoren, wie Gas- oder Rauchfühler, an der Durchführung auf der äußeren Stirnfläche ihrer Dichtkörper vorgesehen sind und ihre Verbindungsleitungen zur Überwachungsstelle wie die für die Temperatursensoren innerhalb
der Gebäudewand verlaufen.

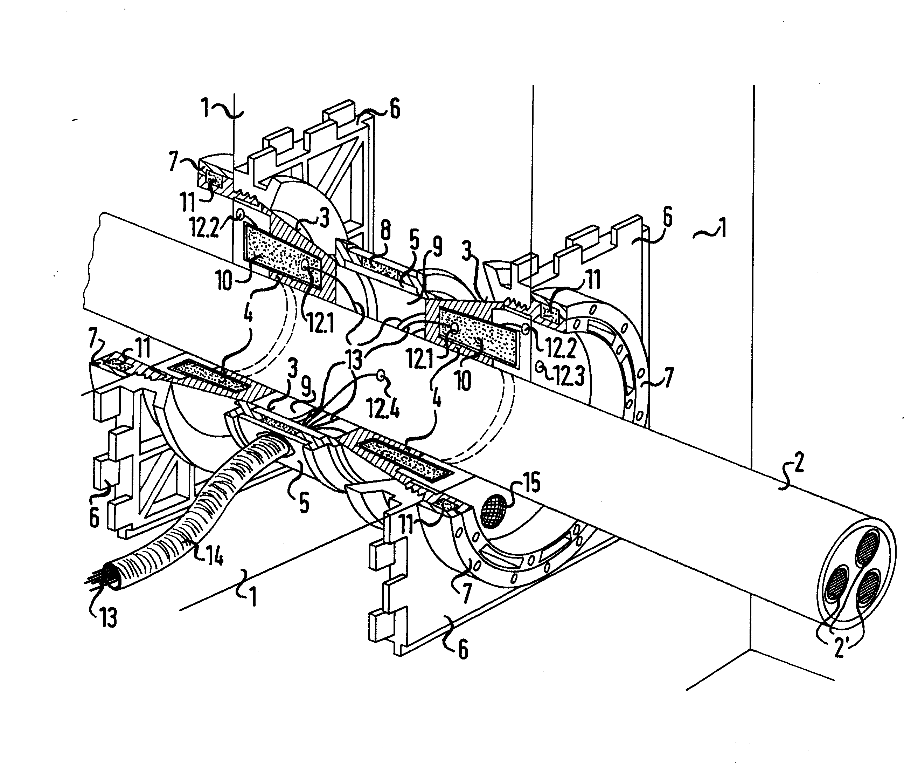

Im folgenden wird die Erfindung an einem in der Zeichnung dargestellten Ausführungsbeispiel näher erläutert;
die einzige Figur zeigt schematisch einen Schnitt durch
eine Gebäudewand mit darin eingebetteter Durchführung
in perspektivischer Darstellung.

Die Zeichnung zeigt lediglich eine Gebäudewand 1 des
im übrigen nicht dargestellten Gebäudes. In der Gebäudewand 1 befindet sich eine Durchführung für eine
Leitung 2, nämlich ein elektrisches Kabel mit drei
Leitungsadern 2'. Die Durchführung ist im Ausführungsbeispiel nur für eine einzige Leitung 2 bestimmt, jedoch kann sie im Rahmen der Erfindung selbstverständlich auch für mehrere Leitungen ausgebildet sein. In
diesem Fall besitzen die den Raum zwischen jeweils
den Leitungen 2 und der Laibung 3 der Wandöffnung ausfüllenden Dichtkörper 4 mehrere, dem jeweiligen Leitungsquerschnitt angepaßte Leitungsaufnahmen. In jedem
Fall besteht die Durchführung aus einem in der Wandöffnung liegenden Laibungsrohr 5 und den beiden an den
Enden des Laibungsrohres den Raum zwischen der Leitung
2 und der Laibung 3 der Wandöffnung ausfüllenden Dichtkörper 4, die einerseits gegen die Leitung 2, andererseits gegen die Laibung 3 der Wandöffnung abdichten.
Weiter besteht die Durchführung aus einen Teil der
Laibung 3 der Wandöffnung bildenden Futterrahmen 6, die eine Druckvorrichtung zum elastischen Verpressen des ihnen jeweils zugeordneten Dichtkörpers 4 in der Wandöffnung bilden. Die Laibung 3 verjüngt sich von der Wandaußenseite zum Wandinnern nach Art eines Kegelstumpfes. In diesem sich verjüngenden Teil der Wandöffnung sind die Dichtkörper 4 jeweils mittels eines die Druckvorrichtung bildenden Druckrings 7 axial verspannt, der in ein Muttergewinde innerhalb des fest in die Wand 1 eingelassenen Futterrahmens 6 eingeschraubt ist. Das Laibungsrohr 5 ist hohlwandig ausgebildet und der Hohlraum 8 mit einem durch Punktierung angedeuteten Flammschutzmittel gefüllt, das sich bei Erwärmung im Brandfall unter Wärmeaufnahme zersetzt und ein flammhemmendes Schutzgas abspaltet. Das Laibungsrohr 5 ist mit in der Zeichnung nicht erkennbaren Öffnungen versehen, die den Hohlraum 8 mit dem Zwischenraum 9 verbinden, aber zunächst so verschlossen sind, daß sie erst in der Wärme des Brandfalls wirksam werden. Auch in den Dichtkörpern 4 und Futterrahmen 6, bzw. deren die Druckvorrichtung zum Verpressen der Dichtkörper 4 bildenden Teilen 7 sind sich zur Leitungsaufnahme bzw. zum Dichtkörper 4 hin öffnende Hohlräume 10, 11 vorgesehen, die ebenfalls mit einem Flammschutzmittel gefüllt sind. Im Ergebnis bildet die Durchführung einen Feuerschutzabschluß, durch den die Leitungstrasse zwischen den beiden durch die Gebäudewand 1 voneinander getrennten Brandabschnittszonen feuerbeständig abgeschottet ist. Zur Brandüberwachung in diesen Brandabschnittszonen sind innerhalb der Durchführung elektrische Temperatursensoren 12.1, 12.2, 12.3, 12.4 angeordnet. Die elektrischen Verbindungsleitungen 13 zwischen diesen Temperatursensoren und einer zur Erfassung der Sensorsignale dienenden, in der Zeichnung nicht weiter dargestellten Überwachungsstelle sind unmittelbar aus dem Inneren der Durchführung heraus in die Gebäudewand 1 geführt und verlaufen tief in deren Innerem. Sowohl die Temperatursensoren 12.1 bis 12.4 als auch ihre Verbindungsleitungen 13 sind daher nach außen gegen eine Brandbeeinflussung im Brandfall geschützt. In der Überwachungsstelle können die Überwachungssignale auf verschiedenste Weise ausgewertet werden, beispielsweise für die Überwachung der Erwärmungstemperatur der einzelnen Kabel, für die Meldung einer kritischen Dichtkörpertemperatur, die Steuerung einer Schaumanlage zur Brandbekämpfung, die Inbetriebnahme einer Warnsirene, die Steuerung und Aktivierung eines in der Packung befindlichen Brandschutzmittels, die Steuerung einer Kühlmittelzufuhr und dergl.

Im Ausführungsbeispiel sind die Temperatursensoren 12.1, 12.2, 12.3 in jeweils beiden Dichtkörpern 4 zu mehreren vorgesehen. Jeweils einer 12.3 dieser Temperatursensoren befindet sich an der äußeren Stirnfläche des Dichtkörpers 4, so daß er vorzugsweise die Raumtemperatur auf der Außenseite der Gebäudewand 1 erfaßt. Weitere Sensoren 12.1 befinden sich im Hohlraum 10 der Dichtkörper 4, um die Temperatur des darin befindlichen Flammschutzmittels zu überwachen. Ein weiterer Temperatursensor 12.4 ist im Zwischenraum 9 axial zwischen den Dichtkörpern 4 und radial zwischen der Leitung 2 und der Laibung 3 der Wandöffnung angeordnet. Dieser Sensor 12.4 kann insbesondere unmittelbar an der Leitung 2 sitzen und damit im direkten Wärmekontakt mit der Leitung stehen.

In der Gebäudewand 1 liegt für die Verbindungsleitungen 13 ein sie aufnehmendes Leitungsrohr 14, das unmittelbar innerhalb der Durchführung mündet und andererseits in Richtung zur Überwachungsstelle hin ebenso wie die Verbindungsleitungen 13 selbst in der Zeichnung abgeschnitten dargestellt ist. Die Mündung des Leitungsrohrs 14 liegt im Zwischenraum 9 zwischen den Dichtkörpern 4, wobei das Leitungsrohr 14 das Laibungsrohr 5 zwischen den Dichtkörpern 4 und den im Laibungsrohr vorgesehenen Hohlraum 8 noch durchsetzt. Daher können die aus der Mündung des Leitungsrohres 14 austretenden Verbindungsleitungen 13 in einfacher Weise zu den an verschiedenen Stellen der Durchführung angeordneten Sensoren 12.1 bis 12.4 geführt werden. Außerdem besteht so die Möglichkeit, das Leitungsrohr 14 mit einem in der Zeichnung nicht dargestellten Behälter für ein Brandschutzmittel zu verbinden und im übrigen die Anordnung so zu treffen, daß das Brandschutzmittel, je nach den Umständen erst nach Aktivierung im Brandfall, durch das Leitungsrohr 14 in den Zwischenraum 9 der Durchführung eingebracht, beispielsweise eingeblasen oder eingepreßt werden kann.

Im übrigen sind im Ausführungsbeispiel weitere Sensoren 15, wie Gas- oder Rauchfühler, an der Durchführung auf der äußeren Stirnfläche ihrer Dichtkörper 4 vorgesehen. Ihre Verbindungsleitungen zur Überwachungsstelle verlaufen wie die für die Temperatursensoren 12.1 bis 12.4 ebenfalls unmittelbar aus der Durchführung in die Gebäudewand 1 hinein, im Ausführungsbeispiel also in das Leitungsrohr 14.

Die dargestellte Durchführung wird mitsamt dem Leitungsrohr 14, den Sensoren 12.1 bis 12.4 und 15 und mit den Verbindungsleitungen 13 vor der Herstellung der Wand mit den Futterrahmen 6, jedoch noch ohne die Druckringe 8, beispielsweise zwischen den Schalungstafeln der zum Errichten einer Betonwand benötigten Wandschalung angeordnet und verlegt, so daß nach dem Gießen der Wand 1 im Schalungshohlraum die Durchführung an ihren Futterrahmen 6 bündig mit den Wandaußenseiten abschließt und die Verbindungsleitungen 13 mit dem Leitungsrohr 14 tief im Inneren der Betonwand 1 verlaufen. Bricht auf einer Seite der Gebäudewand 1 ein Brand aus, pflanzt sich die Erhitzung der Leitung 2 längs der metallischen Kabelseelen 2' schnell bis in die Durchführung fort, wo sie von den Sensoren 12.1 bis 12.4 erfaßt wird. Durch die hohe Feuerwiderstandsdauer einerseits der Durchführung, andererseits der Gebäudewand 1 selbst

- 12 -

sind die Sensoren 12.1 bis 12.4 und die Verbindungsleitungen 13 gegen eine Zerstörung durch den Brand
weitgehend oder sogar vollständig geschützt.

-1-

Werner Hauff
Herlsbühlstraße 19
7925 Ballmertshofen

7900 Ulm, 30.04.86
Akte E/6870    f/sr

Patentansprüche:

1. Anordnung zur Brandüberwachung in einem Gebäude mit mindestens einer Durchführung für wenigstens eine Leitung (2), insbesondere ein elektrisches Kabel, durch eine Wandöffnung in einer der Gebäudewände (1), wobei die Durchführung mit zwei die Wandöffnung auf beiden Wandseiten gegen die Leitung (2) einerseits und die Laibung (3) der Wandöffnung andererseits abschließenden Dichtkörpern (4) einen Feuerschutzabschluß bildet, durch den die Leitungstrasse zwischen verschiedenen, durch die Gebäudewand (1) voneinander getrennten Brandabschnittszonen feuerbeständig abgeschottet ist,
dadurch gekennzeichnet, daß innerhalb der Durchführung mindestens ein elektrischer Temperatursensor (12.1 bis 12.4) angeordnet ist, und daß die elektrische Verbindungsleitung (13) zwischen dem Temperatursensor und einer zur Erfassung der Sensorsignale dienenden Überwachungsstelle unmittelbar aus dem Inneren der Durchführung in die Gebäudewand (1) geführt ist und darin brandgeschützt verläuft.

2. Anordnung nach Anspruch 1, dadurch gekennzeichnet, daß der Temperatursensor (12.1 bis 12.3) in einem

...

der Dichtkörper (4) oder in jedem Dichtkörper
(4) ein eigener Temperatursensor (12.1 bis 12.3)
vorgesehen ist.

3. Anordnung nach Anspruch 2, dadurch gekennzeichnet,
daß je Dichtkörper (4) mehrere Temperatursensoren
(12.1 bis 12.3) vorgesehen sind und einer dieser
Temperatursensoren (12.3) an der äußeren Stirnfläche des Dichtkörpers (4) angeordnet ist.

4. Anordnung nach einem der Ansprüche 1 bis 3, dadurch gekennzeichnet, daß der Temperatursensor
(12.4) bzw. einer von mehreren anderen Temperatursensoren im Zwischenraum (9) axial zwischen den
Dichtkörpern (4) und radial zwischen der Leitung
(2) und der Laibung (3) der Wandöffnung angeordnet
ist.

5. Anordnung nach einem der Ansprüche 1 bis 4, dadurch gekennzeichnet, daß für die Verbindungsleitungen (13) in der Gebäudewand (1) ein die Verbindungsleitungen aufnehmendes Leitungsrohr (14)
vorgesehen ist, das aus der Wand (1) unmittelbar innerhalb der Durchführung mündet.

6. Anordnung nach Anspruch 5, dadurch gekennzeichnet,
daß die Mündung des Leitungsrohres (14) im Zwischenraum (9) zwischen den Dichtkörpern (4) liegt.

7. Anordnung nach Anspruch 6, dadurch gekennzeichnet,

- 3 -

daß bei einer Durchführung mit einem Laibungsrohr (5) zwischen den Dichtkörpern (4) die Mündung des Leitungsrohres (14) in der Wand des
Laibungsrohres (5) liegt.

8. Anordnung nach einem der Ansprüche 5 bis 7, dadurch gekennzeichnet, daß das Leitungsrohr (14)
mit einem Behälter für ein Brandschutzmittel
in Verbindung steht, und das Brandschutzmittel,
gegebenenfalls erst nach Aktivierung im Brandfall, durch das Leitungsrohr (14) in die Durchführung einbringbar ist.

9. Anordnung nach einem der Ansprüche 1 bis 8, dadurch gekennzeichnet, daß weitere Sensoren (15),
wie Gas- oder Rauchfühler, an der Durchführung
auf der äußeren Stirnfläche ihrer Dichtkörper
(4) vorgesehen sind und ihre Verbindungsleitungen zur Überwachungsstelle wie die für die
Temperatursensoren (12.1 bis 12.4) innerhalb
der Gebäudewand (1) verlaufen.

0208878